Europäisches Patentamt

European Patent Office

Office européen des brevets

(19)

(11) EP 0 855 216 A1

(12) # DEMANDE DE BREVET EUROPEEN

(43) Date de publication:
29.07.1998 Bulletin 1998/31

(51) Int Cl.6: **B01J 27/04**, C10G 49/02

(21) Numéro de dépôt: 98400045.5

(22) Date de dépôt: 13.01.1998

(84) Etats contractants désignés:
AT BE CH DE DK ES FI FR GB GR IE IT LI LU MC NL PT SE
Etats d'extension désignés:
AL LT LV MK RO SI

(30) Priorité: 15.01.1997 FR 9700443

(71) Demandeur: INSTITUT FRANCAIS DU PETROLE
92500 Rueil Malmaison (FR)

(72) Inventeurs:
• Raybaud, Pascal
  06100 Nice (FR)
• Toulhoat, Hervé
  78800 Houilles (FR)
• Kasztelan, Slavik
  92500 Rueil-Malmaison (FR)

(54) **Catalyseur comprenant un sulfure mixte et utilisation en hydroraffinage et hydroconversion d'hydrocarbures**

(57)     L'invention concerne un catalyseur d'hydroraffinage et d'hydroconversion de charges hydrocarbonées comprenant un sulfure mixte renfermant au moins deux éléments choisis parmi les éléments dont le numéro atomique est choisi dans le groupe formé par les numéros suivants 3, 11, 12, 19 à 33, 37 à 51, 55 à 83, 87 à 103 caractérisé en ce que ledit sulfure mixte résulte de la combinaison d'au moins un élément dont le sulfure a une énergie de la liaison entre le métal et le soufre inférieure à 50±3 kCal/mol (209±12 kJ/mol) et d'au moins un élément dont le sulfure a une énergie de la liaison entre le métal et le soufre supérieure à 50±3 kCal/mol (209±12 kJ/mol), ledit sulfure mixte possédant alors une énergie moyenne de la liaison entre le métal et le soufre comprise entre 30 et 70 kCal/mol (125 et 293 kJ/mol).

Printed by Jouve, 75001 PARIS (FR)

## Description

La présente invention concerne un catalyseur comprenant un sulfure mixte renfermant au moins deux éléments choisis parmi les éléments dont le numéro atomique est choisi dans le groupe formé par les numéros suivants 3, 11, 12, 19 à 33, 37 à 51, 55 à 83, 87 à 103 caractérisé en ce que ledit sulfure mixte résulte de la combinaison d'au moins un élément dont le sulfure a une énergie de la liaison entre le métal et le soufre inférieure à 50±3 kCal/mol (209±12 kJ/mol) et d'au moins un élément dont le sulfure a une énergie de la liaison entre le métal et le soufre supérieure à 50±3 kCal/mol (209±12 kJ/mol), ledit sulfure mixte possédant alors une énergie moyenne de la liaison entre le métal et le soufre comprise entre 30 et 70 kCal/mol (125 et 293 kJ/mol).

La présente invention concerne également l'utilisation dudit sulfure mixte comme catalyseur pour l'hydroraffinage et l'hydroconversion de charge hydrocarbonées telles que les coupes pétrolières, les coupes issues du charbon ou les hydrocarbures produits à partir du gaz naturel, les hydrocarbures préparés à partir du procédé Fischer-Tropsch, et plus particulièrement pour l'hydrogénation, l'hydrodéazotation, la démercurisation, la désarsénification, l'hydrodéoxygénation, l'hydrodéaromatisation, l'hydrodésulfuration, l'hydrodémétallisation, l'hydroisomérisation, l'hydrodéalkylation, l'hydrogénolyse, la deshydrogénation et l'hydrocraquage de charges hydrocarbonées contenant des composés aromatiques, et/ou oléfiniques, et/ou naphténiques, et/ou paraffiniques, lesdites charges contenant éventuellement des métaux (comme par exemple le nickel, le vanadium, le fer, le mercure, l'arsenic), et/ou de l'azote, et/ou de l'oxygène et/ou du soufre.

Les procédés actuels d'hydroraffinage catalytique utilisent des catalyseurs capables de promouvoir les principales réactions utiles à la mise en valeur des coupes lourdes, en particulier l'hydrogénation des noyaux aromatique (HAR), l'hydrodésulfuration (HDS), l'hydrodéazotation (HDN) et autres hydroéliminations. L'hydroraffinage est employé pour traiter des charges telles que les essences, les gazoles, les gazoles sous vide, les résidus atmosphériques ou sous vide, désasphaltés ou non. Par exemple, il est tout indiqué pour le prétraitement des charges des procédés de craquage et d'hydrocraquage catalytiques. Au moins une étape d'hydroraffinage est habituellement intégrée dans chacun des schémas connus de valorisation des coupes pétrolières lourdes.

Les catalyseurs utilisés en hydroraffinage et en hydrocraquage associent un support de grande surface (100 à 800 $m^2.g^{-1}$ généralement) présentant une acidité superficielle faible à forte et une fonction hydrogénante apportée par au moins un métal du groupe VIB de la classification périodique tel que molybdène ou tungstène et/ou au moins un métal du groupe VIII tel que cobalt ou nickel. Ces catalyseurs peuvent également éventuellement contenir au moins un élément choisi dans le groupe (P, Si, B, F).

Il est maintenant reconnu que l'association du métal du groupe VIB tel que le molybdène ou le tungstène d'une part et d'un métal non noble du groupe VIII tel que le fer, le cobalt ou le nickel à l'état sulfure correspond à une phase sulfure mixte telle les associations au sein d'une phase sulfure des éléments des couples nickel-molybdène, cobalt-molybdène, fer-molybdène, nickel-tungstène, cobalt-tungstène, fer-tungstène dont l'activité pour les différentes réactions de l'hydroraffinage est nettement supérieure à l'activité de chacun des sulfures des métaux cités ci-dessus pris séparément. Il est donc important de rechercher des phases sulfures mixtes présentant des activités importantes pour les réactions de ]'hydroraffinage et d'hydroconversion.

D'autre part, de nombreux sulfures mixtes ont pu être décrits, mais de tels sulfures mixtes décrits n'ont pas nécessairement été testés comme constituant de catalyseur d'hydroraffinage ou d'hydroconversion de charges hydrocarbonées.

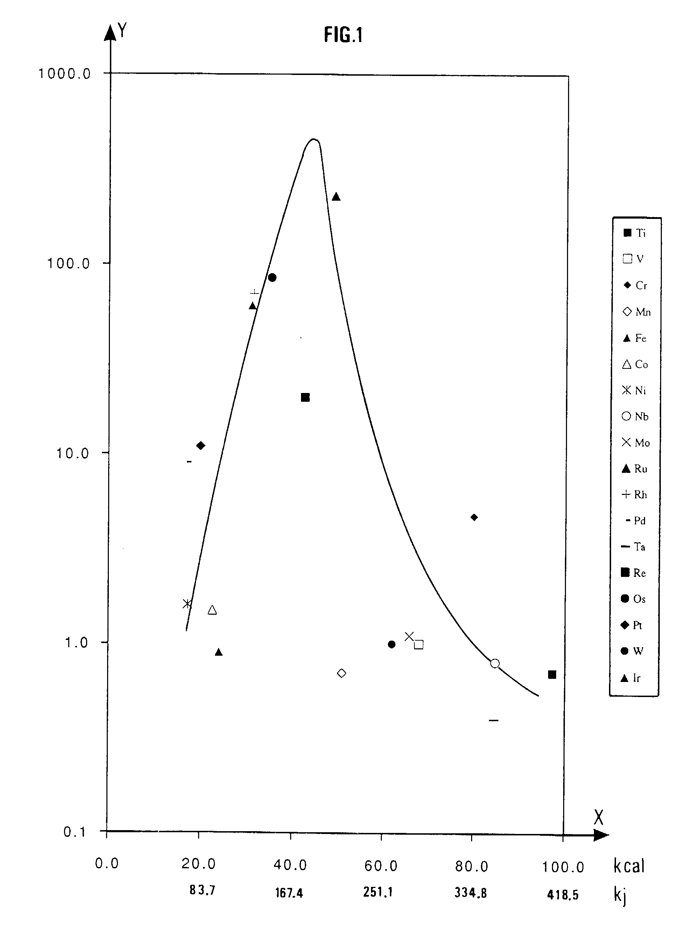

Ainsi seuls un certain nombre de sulfures simples et en particulier les sulfures des métaux de transition ont été étudiés du point de vue de leur propriétés catalytiques et ont été trouvé actifs pour les réactions d'hydroraffinage et d'hydroconversion. Par exemple, il a été observé que l'activité en hydrodésulfuration du dibenzothiophène (DBT) des sulfures massiques des métaux de transition renfermant un élément dont le numéro atomique est choisi dans le groupe formé par les numéros suivants 22 à 28, 40 à 46, 50, 73 à 79 présentait un maximum en activité lorsque ces sulfures de métaux de transition étaient classés dans l'ordre de leur chaleur de formation standard croissante comme le montre le tableau 1 et la figure 1 tiré de T.A. Pecoraro, R.R. Chianelli, Journal of Catalysis, Vol. 67, page 430 à 445, (1981). Les valeurs de la chaleur standard de formation des sulfures de métal sont tirées de "Thermodynamic Data for Inorganic Sulfides, Selenides and Tellurides", K.C. Mills, Butterworths, London, 1974 et du Handbook of Chemistry and Physics, 76ième édition, 1995-1996, CRC Press. La figure 1 ("courbe Chianelli") donne pour différents sulfures de métaux M la valeur de Y = l'activité en HDS en $10^{16}$ molécules DBT/g sulfure/seconde en fonction de X = $-\Delta H°f$ standard en kcal/mol (kJ/mol) M où M est le métal. La courbe a été tracée en fonction des points à titre indicatif.

TABLEAU 1

| Métal | Sulfure $M_aS_b$ | $-\Delta H°f$ standard (kCal/mol) | (kJ/mol) | Activité HDS du DBT $10^{16}$ molecules/g/sec |
|---|---|---|---|---|
| Pd | PdS | 16,9 | 70,7 | 9,0 |

TABLEAU 1   (suite)

| Métal | Sulfure $M_aS_b$ | $-\Delta H°f$ standard (kCal/mol) | (kJ/mol) | Activité HDS du DBT $10^{16}$ molecules/g/sec |
|---|---|---|---|---|
| Ni | $Ni_3S_2$ | 17,2 | 72,0 | 1,6 |
| Pt | PtS | 19,9 | 83,4 | 11,0 |
| Co | $Co_9S_8$ | 22,6 | 94,6 | 1,5 |
| Fe | FeS | 24,0 | 100,4 | 0,9 |
| Ir | $IrS_2$ | 31,0 | 129,7 | 67,0 |
| Rh | $Rh_2S_3$ | 31,4 | 131,4 | 70,0 |
| Os | $OsS_2$ | 35,3 | 147,7 | 85,0 |
| Re | $ReS_2$ | 42,7 | 178,7 | 20,0 |
| Ru | $RuS_2$ | 49,2 | 205,9 | 230,0 |
| Mn | MnS | 51,0 | 213,4 | 0,7 |
| W | $WS_2$ | 62,0 | 259,5 | 1,0 |
| Mo | $MoS_2$ | 65,8 | 275,4 | 1,1 |
| V | VS | 68,0 | 284,2 | 1,0 |
| Cr | $Cr_2S_3$ | 80,0 | 334,8 | 4,7 |
| Nb | $NbS_2$ | 84,6 | 354,0 | 0,8 |
| Ta | $TaS_2$ | 84,8 | 354,9 | 0,4 |
| Ti | $TiS_2$ | 97,3 | 407,2 | 0,7 |

Les sulfures de métaux de transition les plus actifs sont le sulfure de ruthénium, d'osmium, de rhodium et d'iridium. Le maximum d'activité est obtenu pour une chaleur de formation standard intermédiaire de 50±3 kCal/mol (209±12 kJ/mol), ce qui est interprété par la nécessité pour la phase sulfure d'avoir une énergie de la liaison entre le métal et le soufre ni trop forte ni trop faible pour obtenir le maximum d'activité. Cependant, certains sulfure de métaux tel que le manganèse, le rhénium, le chrome et le tantale ne respectent pas cette règle dans la mesure où, par exemple, la chaleur de formation standard du sulfure de manganèse, proche de celle du sulfure de ruthénium, ne lui confère pas pour autant une activité en hydrodésulfuration élevée (cf. figure 1).

L'activité importante des associations nickel-molybdène, cobalt-molybdène, et nickel-tungstène constituants les catalyseur d'hydrotraitement bien connus de l'homme du métier est alors expliquée par la combinaison d'un élément dont le sulfure a une chaleur de formation standard entre le métal et le soufre inférieure à 50±3 kCal/mol (209±12 kJ/mol) (par exemple le cobalt ou le nickel) et d'un élément dont le sulfure a une chaleur de formation standard entre le métal et le soufre supérieure à 50±3 kCal/mol (209±12 kJ/mol) (par exemple le molybdène ou le tungstène), sous la forme d'une phase possédant alors une chaleur de formation standard égale à la moyenne pondérée des chaleurs de formation des sulfures des métaux constituant la phase mixte pris séparément, la dite phase ayant une valeur de la chaleur de formation standard intermédiaire qui lui confère une valeur d'activité en hydrodésulfuration plus élevée que la moyenne pondérée des activités en hydrodésulfuration des sulfures des métaux constituant la phase mixte pris séparément [R.R. Chianelli, T.A. Pecoraro, T.R. Halbert, W.H.Pun, E.I. Stiefel, J. Catal., Vol. 86, p. 226 (1984)]. Dans ce qui suit on appelle cette règle "règle n°1" (ou règle d'après Chianelli).

Ainsi la règle n°1 est vérifiée pour un certain nombre de phases sulfures mixtes connues telles que : cobalt-molybdène, cobalt-tungstène, nickel-molybdène, nickel-tungstène, fer-molybdène, fer-tungstène, cobalt-ruthénium, nickel-ruthénium, cobalt-niobium, nickel-niobium.

Malheureusement, la règle n°1 n'est pas vérifiée pour certains sulfures mixtes comprenant une association d'au moins deux éléments choisis parmi les éléments dont le numéro atomique est choisi dans le groupe formé par les numéros suivants 3, 11, 12, 19 à 33, 37 à 51, 55 à 83, 87 à 103 qui présentent des activités plus élevée que la moyenne pondérée de l'activité de chacun des deux sulfure de métaux pris séparément. Ce qui fait que l'homme du métier ne peut pas établir les phases sulfure mixte ayant une activité intéressante en hydrodésuffuration, à partir de la règle n°1.

Il apparaît donc la règle n°1 ne permet pas de prédire l'activité d'association de certains métaux et que, en conséquence, certaines association de métaux dans une phase sulfure prévues comme étant défavorable à l'aide des résultats et de la règle n°1 exposée précédemment peuvent se révéler actifs pour les réactions de l'hydroraffinage, l'inverse étant également vrai.

Sans vouloir être lié par une quelconque théorie, il semble que l'activité particulièrement élevée des phases sulfures mixtes de la présente invention soit liée à la présence en surface de la phase sulfure d'un plus grand nombre de sites actifs car ceux ci sont générés plus facilement lorsque l'énergie moyenne de la liaison entre le métal et le soufre est comprise entre 30 et 70 kCal/mol (125 et 293 kJ/mol), permettant une amélioration des propriétés hydrogénante, hydrodésulfurante, hydrodéazotante, hydrogénolysante et craquante par rapport à l'activité de chaque sulfure de métaux pris séparément.

Le paramètre caractéristique utilisé pour déterminer l'intérêt d'une nouvelle phase mixte n'est donc plus une chaleur standard de formation mais une énergie de liaison moyenne de la liaison entre le métal et le soufre. Une nouvelle règle n°2 peut être définie qui indique qu'un sulfure mixte comprenant au moins deux éléments dont le numéro atomique est choisi dans le groupe formé par les numéros suivants 3, 11, 12, 19 à 33, 37 à 51, 55 à 83, 87 à 103, dont au moins un élement dont le sulfure a une énergie de la liaison entre le métal et le soufre inférieure à 50±3 kCal/mol (209±12 kJ/mol) et au moins un autre élément dont le sulfure a une énergie de la liaison entre le métal et le soufre supérieure à 50±3 kCal/mol (209±12 kJ/mol), présente une activité en hydrogénation, en hydrodéazotation et en hydrodésulfuration importante et supérieure à la moyenne pondérale des activités des sulfures de métaux qui le compose pris séparément lorsque l'énergie moyenne de la liaison entre le métal et le soufre de l'association des métaux dans une phase sulfure est comprise entre les valeurs de 39 kCal/mol (163 kJ/mol) et 61 kCal/mol (255 kJ/mol). Cette règle est appelée ci-après règle n°2. Elle constitue une des caractéristiques essentielles selon l'invention.

La détermination de l'énergie moyenne de la liaison entre le métal et le soufre (EM-S) pour un sulfure de composition $M_aS_b$ ne contenant pas de liaison soufre-soufre est obtenue par la relation 1 suivante :

$$E_{M\text{-}S} = \frac{-[(a\Delta H^{\circ}f - a\Delta H^{\circ}sub(M_{solide}) - b\Delta H^{\circ}sub(S_{solide})) + (a+b)RT]^*m}{n}$$

avec:

- $\Delta H^{\circ}sub(M_{solide})$ est la chaleur standard de sublimation du métal (en kCal/mol ou k)/mol)
- $\Delta H^{\circ}sub(S_{solide})$ est la chaleur standard de sublimation du soufre (en kCal/mol ou kJ/mol)
- $\Delta H^{\circ}f$ la chaleur standard de formation du sulfure (en kCal/mol ou kJ/mol de métal)
- n : nombre de liaisons entre le métal et le soufre par maille cristallographique du réseau de Bravais
- m : nombre d'unités stoechiométriques de sulfure par maille cristallographique du réseau de Bravais
- R: constante des gaz parfaits : R=0,001985 kCal (0,01 kJ)/mol/degré Kelvin
- T est la température : T=298,15 degré Kelvin

Cette valeur de l'énergie moyenne de liaison entre le métal et le soufre par maille cristallographique de la phase sulfure mixte est reliée aux enthalpies de formation des cristaux à l'aide d'un cycle thermodynamique de Born-Haber.

Certain sulfures contiennent, en plus des liaisons entre le métal et le soufre, des liaisons entre deux atomes de soufre. Dans ce cas, la détermination de l'énergie moyenne de la liaison entre le métal et le soufre ($E_{M\text{-}S}$) pour un sulfure de composition $M_aS_b$ contenant des liaisons soufre-soufre est obtenue par la relation 2 suivante :

$$E_{M\text{-}S} = \frac{-[(a\Delta H^{\circ}f - a\Delta H^{\circ}sub(M_{solide}) - b\Delta H^{\circ}sub(S_{solide})) + (a+b)RT - pE_{S\text{-}S}]^*m}{n}$$

avec:

- $\Delta H^{\circ}sub(M_{solide})$ est la chaleur standard de sublimation du métal (en kCal/mol ou kJ/mol)
- $\Delta H^{\circ}sub(S_{solide})$ est la chaleur standard de sublimation du soufre (en kCal/mol ou kJ/mol)
- $\Delta H^{\circ}f$ la chaleur standard de formation du sulfure (en kCal/mol ou kJ/mol de métal)
- n : nombre de liaisons entre le métal et le soufre par maille cristallographique du réseau de Bravais
- m : nombre d'unités stoechiométriques de sulfure par maille cristallographique du réseau de Bravais
- p : nombre de liaisons S-S par maille cristallographique du réseau de Bravais
- R : constante des gaz parfaits : R=0,001985 kCal (0,01 kJ)/mol/degré Kelvin
- T est la température : T=298,15 degré Kelvin
- $E_{S\text{-}S}$ : Energie de la liaison Soufre-Soufre calculée par une méthode de chimie théorique avec $E_{S\text{-}S}$ =33 kCal/mol (138 kJ/mol).

Les valeurs de la chaleur standard de sublimation du métal ($\Delta$H°sub($M_{solide}$)), de la chaleur standard de sublimation du soufre ($\Delta$H°sub($S_{solide}$)), sont tirées du Handbok of Chemistry and Physics, 76ième édition, 1995-1996, CRC Press. Les valeurs de la chaleur standard de formation des sulfures de métal ($\Delta$H°f) sont tirées de "Thermodynamic Data for Inorganic Sulfides, Selenides and Tellurides", K.C. Mills, Butterworths, London, 1974 et T.A. Pecoraro, R.R. Chianelli, journal of Catalysis, Vol. 67, page 430 à 445, (1981).

Les valeurs de n, le nombre de liaisons entre le métal et le soufre par maille cristallographique du réseau de Bravais, et m le nombre d'unité stoechiométrique de sulfure par maille cristallographique sont obtenues à partir de la représentation graphique de la maille élémentaire du cristal de sulfure telle que disponible dans la base de données ICDS (Inorganic Crystal Structure database, version 2.0, février 95, Gmelin Institut für Anorganische Chemie und Farschinformations Zentrum, Karlsruhe, Germany). La représentation graphique peut-être effectuée sur un écran d'ordinateur avec, par exemple, le module "Solid Builder" du logiciel "Insight-II" distribué par la société Molecular Simulations Inc, (9685 Scranton road, San Diego, California, USA, 92121-3759). On considère qu'une liaison chimique existe entre deux atomes d'une maille élémentaire du réseau de Bravais dès lors que la distance entre ces deux atomes est inférieure à 0,275 nanomètre.

Le tableau 2 rassemble les données et les activités en hydrodésulfuration pour les sulfures classés maintenant par ordre d'énergie de la liaison entre le métal et le soufre croissante.

TABLEAU 2

| Élément | $\Delta$H°sub standard | | Sulfure $M_aS_b$ | n | m | p | -$\Delta$H°f standard | | $E_{M-S}$ | | Activité HDS du DBT $10^{16}$ molecules/ g/sec |
|---|---|---|---|---|---|---|---|---|---|---|---|
| | kCal/ mol | kJ/mol | | | | | kCal/ mol | kJ/ mol | kCal/ mol | kJ/ mol | |
| S | 66,64 | 278,89 | | | | | | | | | |
| Mn | 67,10 | 280,81 | MnS | 6 | 1 | 0 | 51,0 | 213,2 | 30,8 | 128,9 | 0,7 |
| Fe | 99,43 | 416,11 | FeS | 6 | 1 | 0 | 24,0 | 100,4 | 31,7 | 132,6 | 0,9 |
| Ni | 102,63 | 429,51 | $Ni_3S_2$ | 12 | 1 | 0 | 17,2 | 71,9 | 41,1 | 172,0 | 1,6 |
| V | 122,90 | 514,34 | VS | 12 | 2 | 0 | 68,0 | 284,2 | 42,9 | 179,5 | 1,0 |
| Co | 101,50 | 424,78 | $Co_9S_8$ | 38 | 1 | 0 | 22,6 | 94,5 | 43,4 | 181,6 | 1,5 |
| Pd | 90,40 | 378,32 | PdS | 32 | 8 | 0 | 16,9 | 70,6 | 43,5 | 182,0 | 9,0 |
| Rh | 133,10 | 557,02 | $Rh_2S_3$ | 48 | 4 | 0 | 31,4 | 131,2 | 44,1 | 184,6 | 70,0 |
| Cr | 94,80 | 396,74 | $Cr_2S_3$ | 24 | 2 | 0 | 80,0 | 334,8 | 45,8 | 191,7 | 4,7 |
| Ru | 153,60 | 642,82 | $RuS_2$ | 24 | 4 | 4 | 49,2 | 205,9 | 50,5 | 211,3 | 230,0 |
| Os | 189,00 | 790,97 | $OsS_2$ | 24 | 4 | 4 | 35,3 | 147,5 | 54,5 | 228,0 | 85,0 |
| Ir | 165,00 | 690,53 | $IrS_2$ | 6 | 1 | 0 | 31,0 | 129,6 | 54,9 | 229,8 | 67,0 |
| Pt | 135,10 | 564,93 | PtS | 8 | 2 | 0 | 19,9 | 83,3 | 55,4 | 231,9 | 11,0 |
| Ti | 112,97 | 472,78 | $TiS_2$ | 6 | 1 | 0 | 97,3 | 407,2 | 57,3 | 239,8 | 0,7 |
| Mo | 157,30 | 658,30 | $MoS_2$ | 12 | 2 | 0 | 65,8 | 275,0 | 59,4 | 248,6 | 1,1 |
| Re | 183,89 | 769,58 | $ReS_2$ | 24 | 4 | 0 | 42,7 | 178,7 | 60,0 | 251,1 | 20,0 |
| Ta | 186,78 | 781,67 | $TaS_2$ | 6 | 1 | 0 | 84,6 | 354,0 | 64,4 | 269,5 | 0,4 |
| Nb | 173,38 | 725,60 | $NbS_2$ | 6 | 1 | 0 | 84,8 | 354,9 | 65,2 | 272,9 | 0,8 |
| W | 203,00 | 849,56 | $WS_2$ | 12 | 2 | 0 | 62,0 | 259,5 | 66,4 | 277,9 | 1,0 |

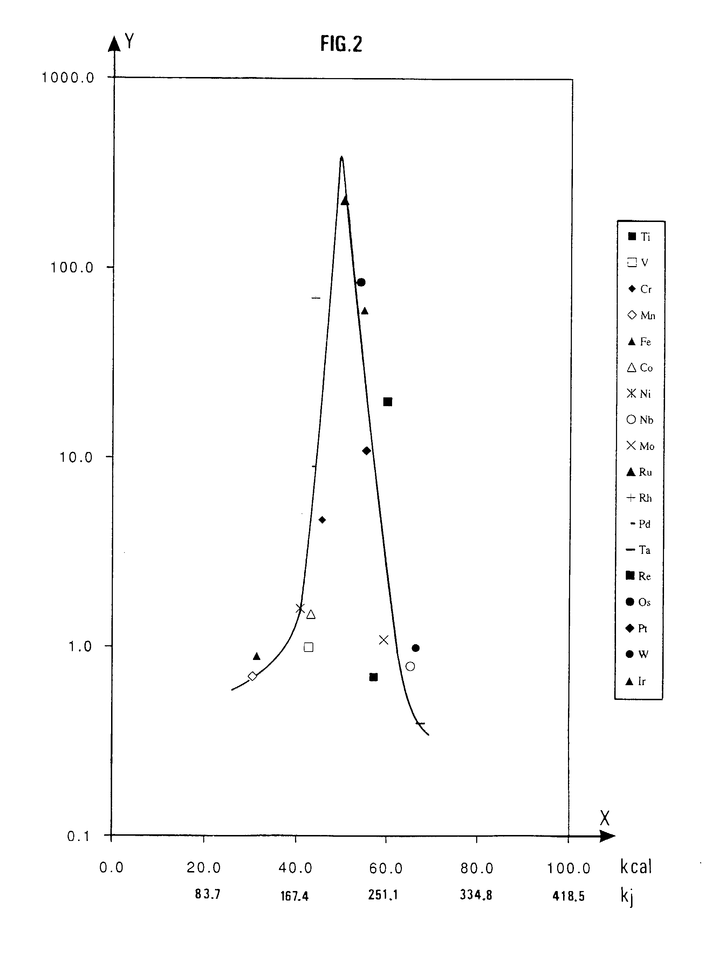

Le classement de ces différents sulfures de métaux de transition selon leur énergie de liaison entre le métal et le soufre croissante du tableau 2 est différent du classement obtenu selon la chaleur de formation croissante du tableau 1. Lorsque l'on représente l'activité en HDS du dibenzothiophène mesuré par T.A. Pecoraro et R.R. Chianelli, Journal of Catalysis, Vol. 67, page 430 à 445, (1981), en fonction de l'énergie de la liaison entre le métal et le soufre on observe une courbe à maximum avec maintenant tous les sulfures se plaçant correctement sur cette courbe (figure 2). La figure 1 ("courbe IFP") donne pour différents métaux M la valeur de $Y$ = l'activité en HDS en $10^{16}$ molécules DBT/g sulfure/ seconde en fonction de $X'$ = -EL (Energie de Liaison) M-S en kCal (kJ)/mol de liaison M-S où M est le métal. La courbe a été tracée en fonction des points à titre indicatif. On observe également que la position relative des différents sulfures simples est différente de ce qui était obtenu pour le classement selon la chaleur de formation standard du tableau 1 et de la figure 1. En conséquence si l'on applique une règle consistant à attribuer une énergie de liaison moyenne à une association de métaux au sein d'une phase sulfure en faisant la moyenne pondérée des énergies de liaison de chacun des sulfure de métaux pris séparément, on peut observer que des associations d'éléments au sein d'une phase sulfure différentes des associations envisagés par la méthode précédente utilisant la chaleur de formation standard ou la règle n°1 auront une activité importante pour les réactions de l'hydroraffinage.

La présente invention concerne un catalyseur comprenant un sulfure mixte, associant des métaux et le soufre, ledit sulfure mixte renfermant au moins deux éléments choisis parmi les éléments dont le numéro atomique est choisi dans le groupe formé par les numéros suivants 3, 11, 12, 19 à 33, 37 à 51, 55 à 83, 87 à 103 caractérisé en ce que ledit sulfure mixte résulte de la combinaison d'au moins un élément dont le sulfure a une énergie de la liaison entre le métal et le soufre inférieure à 50±3 kCal/mol (209±12 kJ/mol) et d'au moins un élément dont le sulfure a une énergie de la liaison entre le métal et le soufre supérieure à 50±3 kCal/mol (209±12 kJ/mol) d'un élément, ledit sulfure mixte possédant alors une énergie moyenne de la liaison entre le métal et le soufre comprise entre 30 et 70 kCal/mol (125 et 293 kJ/mol).

Ledit catalyseur peut comprendre en outre une matrice poreuse, généralement de type oxyde amorphe ou mal cristallisée. Ledit catalyseur comprend également éventuellement une zéolithe, par exemple une zéolithe Y de structure faujasite. Ledit catalyseur comprend aussi éventuellement au moins un élément choisi parmi les éléments P, B et Si. Enfin, ledit catalyseur peut comprendre au moins un élément du groupe VIIA de la classification périodique des éléments (Handbook of Chemistry and Physics, 76ème édition, 1995-1996, intérieur 1ère page de couverture), de préférence le fluor.

Le sulfure mixte compris dans le catalyseur selon l'invention comprend généralement au moins un élément choisi dans le groupe formé par le platine, l'iridium, l'osmium, le rhénium, le ruthénium, le tungstène, le molybdène, le tantale, le niobium et le titane, et au moins un élément choisi dans le groupe formé par le palladium, le nickel, le cobalt, le fer, le rhodium, le ruthénium, le manganèse, le vanadium et le chrome.

En particulier, pour les éléments du tableau 2, le sulfure mixte compris dans le catalyseur selon l'invention comprend généralement au moins une association du soufre et des métaux suivants :

platine-palladium,
platine-nickel,
platine-cobalt,
platine-fer,
platine-rhodium,
platine-manganèse,
platine-vanadium,
platine-chrome,
platine-ruthénium,
osmium-palladium,
osmium-nickel,
osmium-cobalt,
osmium-fer,
osmium-rhodium,
osmium-manganèse,
osmium-vanadium,
osmium-chrome,
osmium-ruthénium,
rhénium-palladium,
rhénium-nickel,
rhénium-cobalt,
rhénium-fer,
rhénium-rhodium,
rhénium-manganèse,
rhénium-vanadium,
rhénium-chrome,

rhénium-ruthénium,
ruthénium-palladium,
ruthénium-nickel,
ruthénium-cobalt,
ruthénium-fer,
ruthénium-rhodium,
ruthénium-manganèse,
ruthénium-vanadium,
ruthénium-chrome,
tungstène-palladium,
tungstène-nickel,
tungstène-cobalt,
tungstène-fer,
tungstène-rhodium,
tungstène-manganèse,
tungstène-vanadium,
tungstène-chrome,
tungstène-ruthénium,
molybdène-palladium,
molybdène-nickel,
molybdène-cobalt,
molybdène-fer,
molybdène-rhodium,
molybdène-manganèse,
molybdène-vanadium,
molybdène-chrome,
molybdène-ruthénium,
tantale-palladium,
tantale-nickel,
tantale-cobalt,
tantale-fer,
tantale-rhodium,
tantale-manganèse,
tantale-vanadium,
tantale-chrome,
tantale-ruthénium,
niobium-palladium,
niobium-nickel,
niobium-cobalt,
niobium-fer,
niobium-rhodium,
niobium-manganèse,
niobium-vanadium,
niobium-chrome,
niobium-ruthénium,
titane-palladium,
titane-nickel,
titane-cobalt,
titane-fer,
titane-rhodium,
titane-manganèse,
titane-vanadium,
titane-chrome,
titane-ruthénium,
iridium-palladium,
iridium-nickel,
iridium-cobalt,
iridium-fer,

iridium-rhodium,
iridium-manganèse,
iridium-vanadium,
iridium-chrome,
iridium-ruthénium.

Généralement, le sulfure mixte compris dans le catalyseur selon l'invention ne comprend pas au moins une association du soufre et des métaux suivants :

ruthénium-nickel,        connu
ruthénium-cobalt,        connu
tungstène-nickel,        connu
tungstène-cobalt,        connu
tungstène-fer,        connu
molybdène-nickel,        connu
molybdène-cobalt,        connu
molybdène-fer.        connu

De manière préférée, le sulfure mixte compris dans le catalyseur selon l'invention ne comprend pas au moins une association du soufre et des métaux suivants :

ruthénium-nickel
ruthénium-cobalt,
tungstène-nickel,
tungstène-cobalt,
tungstène-fer,
molybdène-nickel,
molybdène-cobalt,
molybdène-fer,
molybdène-vanadium,
niobium-nickel,
niobium-cobalt.

Le sulfure mixte compris dans le catalyseur selon l'invention peut également comprendre une association du soufre avec au moins trois métaux, de préférence choisis parmi les combinaisons D1 + D2 + G1 ou D1 + G1 + G2, où D1 est différent de D2 et G1 est différent de G2, et où D1, D2 et G1, C2 sont choisis parmi les éléments dont le numéro atomique est choisi dans le groupe formé par les numéros suivants : 3, 11, 12, 19 à 33, 37 à 51, 55 à 83, 87 à 103.

De manière plus préférée, D1 et D2 sont différents et choisis dans le groupe des métaux suivants : Platine, Iridium, Osmium, Rhénium, Ruthénium, Tungstène, Molybdène, Tantale, Niobium, Titane.

De manière également plus préférée G1 et G2 sont différents et choisis dans le groupe des métaux suivants : Palladium, Nickel, Cobalt, Fer, Rhodium, Manganèse, Vanadium, Chrome.

Généralement l'énergie moyenne de la liaison entre le métal et le soufre du sulfure mixte compris dans le catalyseur selon l'invention, définie comme la moyenne arithmétique des énergies de liaisons des sulfures simples stables ou règle n°2 telle que définie ci-dessus, est comprise entre 30 et 70 kCal/mol (125 et 293 kJ/mol) et de préférence entre 35 et 65 kCal/mol (146 et 272kJ/mol), et de manière encore plus préférée entre 39 et 61 kCal/mol (163 et 255 kJ/mol).

Le sulfure mixte compris dans le catalyseur selon l'invention peut rentrer dans la composition d'un catalyseur qui peut être sous forme supportée, c'est-à-dire qu'il comprend une matrice exerçant en particulier le rôle de support ou bien sous forme massique, c'est-à-dire qu'il ne comprend pas de matrice.

Le sulfure mixte présent dans le catalyseur selon l'invention est caractérisé par la formule générale approchée suivante :

$$MS_x$$

où :

- M est une association d'au moins deux éléments choisis parmi les éléments dont le numéro atomique est choisi dans le groupe formé par les numéros suivants 3, 11, 12, 19 à 33, 37 à 51, 55 à 83, 87 à 103,

- S est le soufre,
- x est un nombre compris entre 0 et 6, et de préférence entre 0,01 et 5,5 et de manière encore plus préférée entre 0,05 et 5.

Le catalyseur massique de la présente invention renferme généralement en % poids par rapport à la masse totale de catalyseur :

- de 0,1 à 100%, de préférence de 0,5 à 100% et de manière encore plus préférée de 1 à 100% d'un sulfure mixte comprenant au moins deux éléments choisis parmi les éléments dont le numéro atomique est choisi dans le groupe formé par les numéros suivants 3, 11, 12, 19 à 33, 37 à 51, 55 à 83, 87 à 103,

le catalyseur pouvant renfermer en outre :

- 0 à 30%, de préférence 0 à 20%, de manière encore plus préférée 2 à 15 % d'au moins un élément choisi dans le groupe formé par les éléments Si, P, et B, et
- 0 à 15%, de préférence 0 à 10%, de manière encore plus préférée 2 à 8 % d'au moins un élément choisi dans le groupe VIIA, de préférence le fluor.

Le catalyseur supporté selon la présente invention renferme généralement en % poids par rapport à la masse totale du catalyseur :

- 1 à 99,9%, de préférence 5 à 99,5% et de manière encore plus préférée 10 à 99% d'au moins un support,
- 0,1 à 99%, de préférence 0,5 à 95% et de manière encore plus préférée 1 à 90% d'un sulfure mixte comprenant au moins deux éléments choisis parmi les éléments dont le numéro atomique est choisi dans le groupe formé par les numéros suivants 3, 11, 12, 19 à 33, 37 à 51, 55 à 83, 87 à 103,

le catalyseur pouvant renfermer en outre :

- de 0 à 95%, de préférence de 0 à 85% et de manière encore plus préférée de 0 à 80% d'au moins une matrice poreuse,
- 0 à 80%, de préférence 0 à 70%, et de manière encore plus préférée 0 à 60% d'au moins une zéolithe, par exemple une zéolithe Y de structure faujasite, forme hydrogène, et éventuellement encore,
- 0 à 20%, de préférence 0 à 15%, de manière plus préférée 2 à 12 % d'au moins un élément choisi dans le groupe formé par les éléments Si, P, et B, et
- de 0 à 30%, de préférence de 0 à 20% et de manière plus préférée de 0 à 10%, et de manière très préférée de 2 à 8 % d'au moins un anion du groupe VIIA, de préférence le fluor.

La synthèse du sulfure mixte compris dans le catalyseur selon l'invention peut être réalisée par toutes méthodes bien connues de l'homme du métier.

Le catalyseur supporté selon l'invention peut être préparé par toute méthode connue de l'homme du métier. Il est habituellement obtenu par imprégnation de la matrice à l'aide de solution des éléments constitutifs de la phase active. La matrice est préalablement mise en forme et calcinée avant imprégnation. La mise en forme peut être réalisée par exemple par extrusion, par pastillage, par la méthode de la goutte d'huile (oil-drop), par granulation au plateau tournant ou par toute autre méthode bien connue de l'homme du métier.

La matrice préformée est alors habituellement calcinée sous air, usuellement à une température d'au moins 400°C, couramment d'environ 500 à 1000°C. L'imprégnation de la matrice est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le catalyseur selon l'invention peut également être obtenu par mélange des poudres contenant l'ensemble des éléments constitutifs du catalyseur final et mise en forme par exemple par extrusion, par pastillage, par la méthode de la goutte d'huile (oil-drop), par granulation au plateau tournant ou par toute autre méthode bien connue de l'homme du métier.

Le sulfure mixte contenant une association d'au moins deux éléments dont le numéro atomique est choisi dans le groupe formé par les numéros suivants 3, 11, 12, 19 à 33, 37 à 51, 55 à 83, 87 à 103, de même que l'hétéroélément X choisi dans le groupe formé par P, B et Si, et l'anion du groupe VIIA peut être introduit dans le catalyseur à divers niveaux de la préparation et de diverses manières.

L'association au sein d'un sulfure mixte d'au moins deux éléments dont le numéro atomique est choisi dans le groupe formé par les numéros suivants 3, 11, 12, 19 à 33, 37 à 51, 55 à 83, 87 à 103, peut être introduite en partie seulement ou en totalité au moment du malaxage de la matrice poreuse.

L'élément éventuel choisi dans le groupe formé par Si, P, B et l'anion éventuel du groupe VIIA peuvent être introduits par au moins une opération d'échange ionique sur le support calciné constitué du sulfure mixte dispersé dans la matrice choisie, à l'aide d'une solution contenant au moins un sel précurseur des éléments Si, P, B et les anions du groupe VIIA.

Dans le cas où les métaux sont introduits en plusieurs imprégnations des sels précurseurs correspondants, une étape de séchage intermédiaire du catalyseur est généralement effectuée à une température comprise entre 60 et 250°C.

Parmi les composés contenant au moins un élément dont le numéro atomique est choisi dans le groupe formé par les numéros suivants 3, 11, 12, 19 à 33, 37 à 51, 55 à 83, 87 à 103, on peut utiliser les oxydes, les hydroxydes, les oxyhydroxydes, les acides, les polyoxométallates, les alkoxydes de formule $M(OR_1)_x$ où $R_1$ est un radical alkyle et x généralement compris entre 2 et 6, les oxalates, les sels d'ammonium, les nitrates, les carbonates, les hydroxycarbonates, les carboxylates, les halogénures, les oxyhalogénures, les phosphates, les hydrures, les nitrures, les borures, les carbures, les phosphures, les oxysulfures, les oxynitrures, les oxycarbures, les oxynitrates, les complexes carbonyles, les complexes cyclopentadiènyles, les carbamates, les thiocarbamates, les carboxylates, les xanthates, les thioxanthates, les acetylacetonates, les thiometallates, les thiophosphates, les thiophosphinates, les thiosels en particulier d'ammonium. On utilise de préférence les oxydes, les nitrates, les halogénures, et les sels des métaux de transition, lanthanides et actinides.

Parmi les composés alcalins et alcalino-terreux, on peut utiliser les oxydes, les hydroxydes, les oxyhydroxydes, les oxalates, les sels d'ammonium, les nitrates, les carbonates, les hydroxycarbonates, les carboxylates, les halogénures, les oxyhalogénures, les phosphates, les sulfures, les oxysulfures, les oxynitrates. On utilise de préférence les nitrates et les carbonates.

La source de phosphore préférée est l'acide phosphorique $H_3PO_4$, mais ses sels et esters comme les phosphates alcalins, phosphates d'ammonium, les phosphates de gallium ou les phosphates d'alkyles conviennent également. Les acides phosphoreux, par exemple l'acide hypophosphoreux, l'acide phosphomolybdique et ses sels, l'acide phosphotungstique et ses sels peuvent également être avantageusement employés. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser un hydrogel, un aérogel ou une suspension colloïdale, les oxydes de précipitation, les oxydes provenant de l'hydrolyse d'esters tel que l'orthosilicate d'éthyle $Si(OEt)_4$, les siloxanes, les silicates d'halogénures comme le fluorosilicate d'ammonium $(NH_4)_2SiF_6$ ou le fluorosilicate de sodium $Na_2SiF_6$. L'acide siliconiolybdique et ses sels, l'acide silicotungstique et ses sels peuvent également être avantageusement employés. Les silicates amorphes, par exemple d'aluminium, de phosphore, les silicates mésoporeux, et les silicates cristallisés tels que les silicates alcalins et alcalino-terreux, les silicates de métaux de transition tels que les silicates de cobalt, de nickel.

La source de bore peut être un borate amorphe, tels que l'acide borique, de préférence l'acide orthoborique $H_3BO_3$, le biborate ou le pentaborate d'ammoniums, l'oxyde de bore, les esters boriques de formules $B(OR)_3$ et $HB(OR)_2$ dans lesquels R est un reste hydrocarboné ayant habituellement de 1 à 50 atomes de carbone et pouvant comporter des hétéroatomes dans la chaîne ou comme substituant sur la chaîne. A titre d'exemple de restes hydrocarbonés on peut citer les radicaux méthyles, éthyle, propyles, butyles, pentyles, heptyles, et octyles. le borate d'aluminium, le borate de phosphore et les borates cristallisés tel que les borosilicates. Les groupes R dans les formules ci-avant peuvent être identiques ou différents des autres. Le bore peut être introduit par exemple par une solution d'acide borique dans un alcool.

Les source d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF4$ ou de sodium $Na_2SiF_6$. Le fluor peut être introduit par exemple par imprégnation d'une solution aqueuse d'acide fluorhydrique ou de fluorure d'ammonium. Les anions chlorures peuvent être introduit sous la forme d'acide chlorhydrique, ou de ces sels. Ces sels sont formés avec des métaux alcalins, l'ammonium ou un composé organique. Dans ce dernier cas, le sel est avantageusement formé dans le mélange réactionnel par réaction entre le composé organique et l'acide chlorhydrique.

Le catalyseur selon l'invention renferme généralement au moins une matrice minérale poreuse habituellement amorphe ou mal cristallisée. Cette matrice est habituellement choisie dans le groupe formé par l'alumine, la silice, la silice-alumine, la magnésie, l'argile, l'oxyde de titane ou l'oxyde de zirconium, l'oxyde de lanthane, l'oxyde de cérium, les phosphates d'aluminium, les phosphates de bore, ou un mélange de aux moins deux des oxydes cités ci dessus et les combinaisons d'alumine et d'oxyde de bore, les mélanges d'alumine et d'oxyde de titane, d'alumine et de zircone et d'oxyde de titane et de zircone. On peut choisir également les aluminates, et par exemple les aluminates de magnésium, de calcium, de baryum, de manganèse, de fer, de cobalt, de nickel, de cuivre et de zinc, les aluminates mixtes et par exemple ceux contenant au moins deux des métaux cités ci dessus. On peut choisir également les titanates, et par exemple les titanates de zinc, nickel, cobalt. On préfère utiliser des matrices contenant de l'alumine, sous toutes ces formes connues de l'homme du métier, par exemple de l'alumine gamma. On peut aussi avantageusement utiliser des mélanges d'alumine et de silice et des mélanges d'alumine et d'oxyde de bore.

La matrice peut également renfermer, en plus d'au moins un des composés cités ci-dessus, au moins une argile simple synthétique ou naturelle de type phyllosilicate 2:1 dioctaédrique ou phyllosilicate 3:1 trioctaédrique tels que la kaolinite, l'antigorite, la chrysotile, la montmorillonite, la beidellite, la vermiculite, le talc, l'hectorite, la saponite, la laponite. Ces argiles peuvent être éventuellement être délaminées.

On peut aussi avantageusement utiliser des mélanges d'alumine et d'argile et des mélanges de silice-alumine et d'argile.

La matrice peut également renfermer, en plus d'au moins un des composés cités ci-dessus, au moins un composé choisi dans le groupe formé par la famille des tamis moléculaires de type aluminosilicate cristallisé ou zéolithes synthétiques ou naturelles telles que par exemple la zéolithe Y, la zéolithe Y fluorée, la zéolithe Y contenant des terres rares, la zéolithe X, la zéolithe Y contenant des ions alcalins ou alcalino-terreux, la zéolithe L, la zéolithe béta, la mordénite à petits pores, la mordénite à grands pore, les zéolithes oméga, Nu-10, ZSM-22, Nu-86, Nu-87, et la zéolithe ZSM-5.

On peut aussi avantageusement utiliser des mélanges d'alumine et de zéolithe et des mélanges de silice-alumine et de zéolithe.

Parmi les zéolithes on préfère habituellement employer des zéolithes dont le rapport atome de charpente silicium/aluminium (Si/Al) est supérieur à environ 3:1. On emploie avantageusement des zéolithes de structure faujasite et en particulier les zéolithes Y stabilisées et ultrastabilisées USY soit sous forme au moins partiellement échangée avec des cations métalliques, par exemple des cations des métaux alcalins ou alcalino-terreux et/ou des cations de métaux de terres rares de numéro atomique 57 à 71 inclus, soit sous forme hydrogène (Zeolite Molecular Sieves Structure, Chemistry and Uses, D.W. BRECK, J. WILLEY and sons 1973).

La matrice poreuse peut également renfermer, outre au moins un des composés cité ci-dessus, au moins un composé choisi dans le groupe formé par la famille des tamis moléculaires cristallisés non zéolithiques tel que les silices mésoporeuses, la silicalite, les silicoaluminophosphates, les aluminophosphates, les ferrosilicates, les silicoaluminates de titane, les borosilicates, les chromosilicates et les aluminophosphate de métaux de transition (dont le cobalt).

La matrice peut également renfermer outre au moins un des composés cité ci-dessus, au moins un composé du phosphore tel que les phosphates amorphes par exemple d'aluminium, de bore, de métaux de transitions et les phosphates cristallisés, et en particulier les aluminophosphates et cristallins synthétiques ou naturels.

L'imprégnation des éléments sur la matrice peut être facilitée par ajout d'acide phosphorique dans les solutions ce qui permet d'introduire aussi le phosphore de façon à promouvoir l'activité catalytique. D'autres composés du phosphore peuvent être utilisés comme il est bien connu de l'homme du métier.

L'imprégnation des éléments sur la matrice peut être également facilitée par ajout d'eau oxygénée comme il est bien connu de l'homme du métier.

L'invention concerne également un procédé d'hydroraffinage ou d'hydrocraquage de charges hydrocarbonées caractérisé en ce qu'il comprend l'utilisation d'un catalyseur selon l'invention pour le traitement ou le prétraitement de charges. Dans ledit procédé, on procède à au moins une des opérations suivantes : l'hydrogénation, l'hydrodéazotation, l'hydrodéoxygénation, la démercurisation, la désarsénification, l'hydrodéaromatisation, l'hydrodésulfliration, l'hydrodémétallisation, l'hydroisomérisation, l'hydrodéalkylation, l'hydrogénolyse, la deshydrogénation et l'hydrocraquage à partir de charges hydrocarbonées contenant des composés aromatiques, et/ou oléfiniques, et/ou naphténiques, et/ou paraffiniques.

Le catalyseur selon l'invention peut être avantageusement utilisé lors du prétraitement de charges de craquage catalytiques et en première étape d'un hydrocraquage ou d'une hydroconversion douce. Il est alors usuellement employé en association avec un catalyseur acide, zéolithique ou non zéolithique, pour la deuxième étape du traitement.

Les charges employées pour un tel procédé selon l'invention sont des coupes pétrolières seules ou en mélange telles que des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés et des charges provenant des procédés de conversions thermiques ou catalytiques telles que ses coupes issues du charbon, ses hydrocarbures produits à partir du gaz naturel, ou ses hydrocarbures produits à partir de la synthèse Fischer-Tropsch. Lesdites charges comprennent le plus souvent au moins un hétéroatome tel que le soufre, l'oxygène ou l'azote et/ou au moins un métal.

Les conditions opératoires mises en oeuvre dans le procédé selon l'invention sont très variables en fonction de la nature de la charge, de la qualité des produits désirés et des installations dont dispose le raffineur. Elles sont généralement les suivantes : la température est supérieure à 100°C, et souvent comprise entre 150°C et 480°C, la pression est supérieure à 0,05 MPa, et souvent supérieure à 1 MPa, le taux de recyclage d'hydrogène est au minimum de 50 et souvent compris entre 50 et 5000 normaux litres d'hydrogène par litre de charge et la vitesse volumique horaire est comprise entre 0,1 et 20 volume de charge par volume de catalyseur et par heure.

De préférence, la mise en oeuvre du procédé selon l'invention est telle que le catalyseur est soumis à un traitement de sulfuration permettant de transformer, au moins en partie, les espèces métalliques en sulfure avant leur mise en contact avec la charge à traiter. Ce traitement d'activation par sulfuration est bien connu de l'homme du métier et peut être effectué par toute méthode déjà décrite dans la littérature.

Les exemples suivants illustrent la présente invention sans toutefois en limiter la portée.

**Liste des catalyseurs des exemples :**

| Catalyseur | |
|---|---|
| A1 | V |
| A2 | Pd |
| A3 | V-Pd |
| B1 | Ni |
| B2 | Pt |
| B3 | Ni-Pt |
| C1 | Ru |
| C2 | V-Ru |
| D1 | Ni-Mo (comparatif) |
| D2 | Co-Mo (comparatif) |

Exemple 1

Préparation du support alumine entrant dans la composition des catalyseurs conformes à l'invention,

Nous avons fabriqué un support à base d'alumine en grande quantité de façon à pouvoir préparer les catalyseurs décrits ci après à partir du même support mis en forme. Pour ce faire, nous avons utilisé une matrice composée de boehmite tabulaire ultrafine ou gel d'alumine commercialisée sous le nom SB3 par la société Condéa Chemie Gmbh. Ce gel a été mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,3 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 243 $m^2$/g, un volume poreux de 0,61 $cm^3$/g et une distribution en taille de pore monomodale centrée sur 100 Å. L'analyse de la matrice par la diffraction des rayons X révèle que celle ci est composée uniquement d'alumine gamma cubique de faible cristallinité.

Exemple 2

Préparation des catalyseurs contenant Pd et V (non conformes à l'invention)

Nous avons fabriqué des catalyseurs contenant du vanadium seul, du palladium seul et du vanadium et du palladium supportés sur le support décrit dans l'exemple 1. Le catalyseur A1 est préparé par ajout de vanadium sur le support extrudé par imprégnation à sec en milieu aqueux en utilisant le métavanadate d'ammonium $V_{12}O_{40}$• $nH_2O$ comme précurseur. Après imprégnation à sec, les extrudés sont séchés pendant une nuit à 80°C puis calcinés sous air sec pendant 2 heures à 500°C. Le catalyseur Al ainsi obtenu a une teneur de 0,5 atomes de vanadium par $nm^2$ de surface du support soit 1,02 gramme de l'élément vanadium pour 100 gramme de support.

Le catalyseur A2 est préparé par ajout de palladium sur le support extrudé de l'exemple 1 par imprégnation à sec en milieu aqueux en utilisant du nitrate de palladium $Pd(NO_3)_2$•$nH_2O$ comme précurseur. Après imprégnation à sec, les extrudés sont séchés pendant une nuit à 80°C puis calcinés sous air sec pendant 2 heures à 500°C. Le catalyseur A2 ainsi obtenu a une teneur de 0,5 atomes de palladium par $nm^2$ de surface du support soit 2,12 gramme de l'élément palladium pour 100 g de support.

Le catalyseur A3 est préparé par ajout de palladium sur le catalyseur Al contenant du vanadium par imprégnation à sec en milieu aqueux en utilisant du nitrate de palladium $Pd(NO_3)_2 \cdot nH_2O$ comme précurseur. Après imprégnation à sec, les extrudés sont séchés une nuit à 80°C puis calcinés sous air sec 2 heures à 500°C. Le catalyseur A3 ainsi obtenu a une teneur de 0.5 atomes de palladium par $nm^2$ de surface du support et de 0,5 atomes de vanadium par $nm^2$ de surface du support soit 2,12 gramme de l'élément platine et 1,02 gramme de l'élément vanadium pour 100 g de support. La proportion molaire de vanadium par rapport au total du vanadium et du palladium est de 0,5. Le catalyseur contient donc une association $V_{0,5}Pd_{0,5}$.

Les catalyseurs préparés ci-dessus sont sulfurés dans un autoclave sous pression autogène en présence de $CS_2$. Pour 100 g de catalyseur on ajoute 20 ml de $CS_2$ dans l'autoclave, on ferme et on chauffe à 400°C pendant 10 heures. La pression interne est alors d'environ 4 MPa.

Exemple 3

Préparation des catalyseurs contenant Pt et Ni (conformes à l'invention)

Nous avons fabriqué une série de catalyseurs contenant du platine seul, du nickel seul et du platine et du nickel supportés sur le support décrit dans l'exemple 1. Le catalyseur B1 est préparé par ajout de nickel sur le support extrudé par imprégnation à sec en milieu aqueux en utilisant le nitrate de nickel $Ni(NO_3)_2 \cdot 6H_2O$ comme précurseur. Après imprégnation à sec, les extrudés sont séchés pendant une nuit à 80°C puis calcinés sous air sec pendant 2 heures à 500°C. Le catalyseur B1 ainsi obtenu a une teneur de 0,5 atomes de nickel par $nm^2$ de surface du support soit 1,17 gramme de l'élément nickel pour 100 g de support.

Le catalyseur B2 est préparé par ajout sur le support extrudé de platine par imprégnation à sec en milieu aqueux en utilisant l'acide chloroplatinique $H_2PtCl_6 \cdot nH_2O$ comme précurseur. Après imprégnation à sec, les extrudés sont séchés pendant une nuit à 80°C puis calcinés sous air sec pendant 2 heures à 500°C. Le catalyseur B2 ainsi obtenu a une teneur de 1,2 atomes de platine par $nm^2$ de surface du support soit 9,3 gramme de l'élément platine pour 100 g de support.

Le catalyseur B3 est préparé par ajout de platine sur le catalyseur A1 contenant du nickel par imprégnation à sec en milieu aqueux en utilisant l'acide chloroplatinique $H_2PtCl_6 \cdot nH_2O$ comme précurseur. Après imprégnation à sec, les extrudés sont séchés pendant une nuit à 80°C puis calcinés sous air sec pendant 2 heures à 500°C. Le catalyseur B3 ainsi obtenu a une teneur de 1,2 atomes de platine par $nm^2$ de surface du support et de 0,5 atomes de nickel par $nm^2$ de surface du support soit 9,3 gramme de l'élément platine et 1,17 gramme de l'élément nickel pour 100 g de support. La proportion molaire de nickel par rapport au total du nickel et du platine est de 0,3. Le catalyseur contient donc une association $Ni_{0,3}Pt_{0,7}$.

Les catalyseurs préparés ci-dessus sont sulfurés dans un réacteur à lit fixe de catalyseur balayé par un courant de gaz contenant 15% d'$H_2S$ dans l'hydrogène à pression atmosphérique. Pour 5 g de catalyseur on fait passer 2 litres par heure du mélange et on chauffe le catalyseur à une température de 400°C pendant 10 heures. Cette sulfuration est dénommée S2.

Exemple 4

Préparation des catalyseurs contenant Ru et V (conformes à l'invention)

Nous avons fabriqué une série de catalyseurs contenant du ruthénium seul et du vanadium et du ruthénium supportés sur le support décrit dans l'exemple 1. Le catalyseur C1 est préparé par ajout de ruthénium sur le support extrudé par imprégnation à sec en milieu aqueux en le chlorure de ruthénium $RuCl_3 \cdot nH_2O$ comme précurseur. Après imprégnation à sec, les extrudés sont séchés pendant une nuit à 80°C sans être calcinés. Le catalyseur C1 ainsi obtenu a une teneur de 1,2 atomes de ruthénium par $nm^2$ de surface du support soit 4,83 gramme de l'élément ruthénium pour 100 g de support.

Le catalyseur C2 est préparé par ajout de ruthénium sur le catalyseur Al contenant du vanadium par imprégnation à sec en milieu aqueux en utilisant le chlorure de ruthénium $RuCl_3 \cdot nH_2O$ comme précurseur. Après imprégnation à sec, les extrudés sont séchés pendant une nuit à 80°C sans être calcinés. Le catalyseur C2 ainsi obtenu a une teneur de 1,2 atomes de ruthénium par $nm^2$ de surface du support et de 0,5 atomes de vanadium par $nm^2$ de surface du support soit 4,83 gramme de l'élément ruthénium et 1,02 gramme de l'élément vanadium pour 100 g de support. La proportion molaire de vanadium par rapport au total du vanadium et du ruthénium est de 0,3. Le catalyseur contient donc une association $V_{0,3}Ru_{0,7}$,

Les catalyseurs préparés dans les exemples ci-dessus sont sulfurés dans un réacteur à lit fixe de catalyseur balayé

EP 0 855 216 A1

par un courant de gaz contenant 15% d'$H_2S$ dans l'azote à pression atmosphérique. Pour 5 g de catalyseur on fait passer 2 litre par heure du mélange et on chauffe le catalyseur à une température de 400°C pendant 10 heures.

Exemple 5

Catalyseurs NiMo et CoMo (comparatifs)

Nous avons ajouté du molybdène sur le support extrudé de l'exemple 1 par imprégnation à sec en milieu aqueux. Le sel de molybdène est l'heptamolybdate d'ammonium $Mo_7O_{24}(NH_4)_6 \cdot 4H_2O$. Après imprégnation à sec, les extrudés sont séchés pendant une nuit à 120°C puis calciné à 350°C pendant 2 heures sous air humide contenant 7,5% volume d'eau. Nous avons lors ajouté du nickel sur ce support imprégné de molybdène par imprégnation à sec en milieu aqueux de nitrate de nickel $Ni(NO_3)_2 \cdot 6H_2O$. Après imprégnation à sec, les extrudés sont séchés pendant une nuit à 120°C puis calcinés à 550°C pendant 2 heures sous air humide contenant 7,5% volume d'eau. La teneur finale en molybdène du catalyseur D1 est de 1,2 atomes de molybdène par $nm^2$ de surface du support et de 0,5 atomes de nickel par $nm^2$ de surface du support soit 4,58 g de l'élément molybdène et 1,17 gramme de l'élément nickel pour 100 g de support. La proportion molaire de nickel par rapport au total du nickel et du molybdène est de 0,3. Le catalyseur contient donc une association $Ni_{0,3}No_{0,7}$.

Le catalyseur CoMo, D2, est obtenu par imprégnation à sec en milieu aqueux du support de l'exemple 1 de l'heptamolybdate d'ammonium $Mo_7O_{24}(NH_4)_6 \cdot 4H_2O$. Après imprégnation à sec, les extrudés sont séchés pendant une nuit à 120°C puis calcinés à 350°C pendant 2 heures sous air humide contenant 7,5% volume d'eau. Nous avons lors ajouté du cobalt sur ce support imprégné de molybdène par imprégnation à sec en milieu aqueux de nitrate de nickel $Co(NO_3)_2 \cdot 6H_2O$. Après imprégnation à sec, les extrudés sont séchés pendant une nuit à 120°C puis calcinés à 550°C pendant 2 heures sous air humide contenant 7,5% volume d'eau. La teneur finale en molybdène du catalyseur D1 est de 1,2 atomes de molybdène par $nm^2$ de surface du support et de 0,5 atomes de cobalt par $nm^2$ de surface du support soit 4,58 g de l'élément molybdène et 1,17 gramme de l'élément cobalt pour 100 g de support. La proportion molaire de cobalt par rapport au total du cobalt et du molybdène est de 0,3. Le catalyseur contient donc une association $Co_{0,3}Mo_{0,7}$.

Les catalyseurs préparés ci-dessus sont sulfurés dans un réacteur à lit fixe de catalyseur balayé par un courant de gaz contenant 15% d'H2S dans l'hydrogène à pression atmosphérique. Pour 5 g de catalyseur on fait passer 2 litre par heure du mélange et on chauffe le catalyseur à une température de 400°C pendant 10 heures.

Exemple 6

Test en HDS du dibenzothiophène

Les catalyseurs précédemment décrits ont été comparés en test d'hydrodésulfuration du dibenzothiophène dans un réacteur à lit fixe traversé sous pression d'hydrogène dans les conditions opératoires suivantes :

| | |
|---|---|
| Pression totale | 6MPa |
| Vitesse Volumique Horaire | 6 h-1 |
| Température | 250°C |
| Débit d'hydrogène | 450l/l de charge |

Les performances catalytiques sont données dans le tableau 3 suivant, Elles sont exprimées en activité relative par rapport à l'activité spécifique en mole de DBT convertie par g de catalyseur et par heure du catalyseur de référence B1.

Tableau 3 :

| Activité des catalyseurs en hydrodésulfuration du dibenzothiophène | | |
|---|---|---|
| Catalyseur | Métaux | Activité relative HDS du DBT |
| A1 | V | 1,5 |
| A2 | Pd | 12 |
| A3 | V-Pd | 5 |
| B1 | Ni | 1 |

Tableau 3 :  (suite)

| Activité des catalyseurs en hydrodésulfuration du dibenzothiophène | | |
|---|---|---|
| Catalyseur | Métaux | Activité relative HDS du DBT |
| B2 | Pt | 10 |
| B3 | Ni-Pt | 90 |
| C1 | Ru | 100 |
| C2 | V-Ru | 130 |
| D1 | Ni-Mo | 50 |
| D2 | Co-Mo | 65 |

Les prévision d'effet de promotion selon la règle n°1 des chaleurs de formation moyenne ou selon la règle n°2 des énergies de liaison entre le métal et le soufre moyennes sont données dans le tableau 4 suivant dans lequel on indique également les valeurs pour le Ru.

TABLEAU 4

| Ref | Métaux | Règle n°1 chaleur de formation | | | Règle n°2 énergie de liaison M-S | | |
|---|---|---|---|---|---|---|---|
| | | Effet de promotion | $-\Delta H°f$ | | Effet de promotion | $E_{M-S}$ | |
| | | | kCal/mol | kJ/mol | | kCal/mol | kJ/mol |
| A3 | $V_{0,5}Pd_{0,5}$ | oui | 42,5 | 178 | non | - | - |
| B3 | $Ni_{0,3}Pt_{0,7}$ | non | - | - | oui | 51,1 | 213,9 |
| C2 | $V_{0,3}Ru_{0,7}$ | non | - | - | oui | 48,2 | 201,8 |
| D1 | $Ni_{0,3}Mo_{0,7}$ | oui | 51,22 | 215 | oui | 53,9 | 225,6 |
| D2 | $Co_{0,3}Mo_{0,7}$ | oui | 54,4 | 228 | oui | 54,6 | 228,5 |
| C1 | Ru | | 49,2 | 206 | | 50,5 | 211,3 |

On constate que selon la règle n°1 des chaleurs de formation moyenne, l'association du vanadium et du palladium devrait donner un effet de promotion ce qui n'est pas observé dans le tableau 3. Par contre, la règle n°2 des énergies de liaison moyenne prévoit bien l'absence d'effet de promotion.

L'association du nickel et du platine et l'association du vanadium et du ruthénium ne devrait pas donner d'effet de promotion selon la règle n°1 des chaleurs de formation moyenne. Par contre, selon la règle n°2 des énergies moyennes de liaison, il devrait y avoir un effet de promotion ce qui est en effet observé dans le tableau 3. Ceci montre que la règle n°2 de l'énergie moyenne de la liaison entre le métal et le soufre est meilleure pour la prédiction des associations de métaux conduisant à un effet de promotion pour l'hydrodésulfuration que la règle n°1. En particulier la règle n°2 permet de définir avec succès des associations d'éléments sous forme de sulfure mixte très actifs pour les réactions de l'hydrotraitement.

On constate également dans le tableau 3 que les nouvelles formules ainsi obtenues peuvent être plus active que le catalyseur contenant du ruthénium mais surtout plus actif que les associations nickel-molybdène, nickel-tungstène ou cobalt-molybdène industriellement répandues.

Exemple 13

Test en HDS de gas-oil des catalyseurs

Les huit catalyseurs précédemment décrits ont également été comparés en test d'hydrodésulfuration de gas-oil dont les principales caractéristiques sont données dans le tableau suivant :

| | |
|---|---|
| Densité à 15°C | 0,856 |
| Indice de Réfraction à 20°C | 1,4564 |

(suite)

| Viscosité à 50°C | 3,72 cSt ou 3,72 x $10^6$m$^2$/s |
|---|---|
| Soufre | 1,57%poids |
| Distillation Simulée | |
| PI | 153°C |
| 5% | 222°C |
| 50% | 315°C |
| 95% | 415°C |
| PF | 448°C |

Le test d'HDS de gazole est mené dans les conditions opératoires suivantes :

| Pression totale | 3 MPa |
|---|---|
| Vitesse Volumique Horaire | 2h$^{-1}$ |
| Température | 340°C |
| Débit d'hydrogène | 250l/l de charge |

Chacun des catalyseurs est sulfuré avant le test par un mélange gazole/DMDS jusqu'à 350°C.

Les performances catalytiques des trois catalyseurs sont données dans le tableau 5 suivant. Elles sont exprimées en activité, en posant que celle du catalyseur C1 est égale à 1 et en considérant qu'elle est d'ordre 1,5. La relation liant l'activité et la conversion (%HDS) est la suivante :

$$\text{Activité} = \left[\frac{100}{(100\text{-}\%HDS)}\right]^{0,5} - 1$$

TABLEAU 5

| Ref. | Métaux | Activité relative HDS GO |
|---|---|---|
| A1 | V | 1 |
| A2 | Pd | 4 |
| A3 | V-Pd | 2 |
| B1 | Ni | 1 |
| B2 | Pt | 1,5 |
| B3 | Ni-Pt | 4,5 |
| C1 | Ru | 4 |
| C2 | V-Ru | 4,2 |
| D1 | Ni-Mo | 3,5 |
| D2 | Co-Mo | 3,8 |

En test d'hydrodésulfuration de gazole, le catalyseur contenant l'association V-Pd est actif mais ne montre pas d'effet positif lorsque l'on associe le V et Pd en accord avec la règle n°2 décrite dans le texte et contrairement à ce que prédit la règle n°1. Les associations de métaux dans une phase sulfure mixte répondant à la règle n°2 dite des énergies de liaison moyennes présentent donc une niveau d'activité très importante.

**Revendications**

1. Catalyseur comprenant un sulfure mixte renfermant au moins deux éléments choisis parmi les éléments dont le numéro atomique est choisi dans le groupe formé par les numéros suivants 3, 11, 12, 19 à 33, 37 à 51, 55 à 83, 87 à 103 caractérisé en ce que ledit sulfure mixte résulte de la combinaison d'au moins un élément dont le sulfure a une énergie de la liaison entre le métal et le soufre inférieure à 50±3 kCal/mol (209±12 kJ/mol) et d'au moins un élément dont le sulfure a une énergie de la liaison entre le métal et le soufre supérieure à 50±3 kCal/mol (209±12 kJ/mol) d'un élément, ledit sulfure mixte possédant alors une énergie moyenne de la liaison entre le métal et le soufre comprise entre 30 et 70 kCal/mol (125 et 293 kJ/mol).

2. Catalyseur selon la revendication 1 comportant en outre une matrice poreuse.

3. Catalyseur selon l'une des revendications 1 ou 2 comportant également une zéolithe.

4. Catalyseur selon l'une des revendications 1 à 3 comprenant aussi au moins un élément choisi parmi les éléments P, B et Si.

5. Catalyseur selon l'une des revendications 1 à 4 comprenant au moins un élément du groupe VIIA de la classification périodique des éléments.

6. Catalyseur selon l'une des revendications 1 à 5 tel que ledit sulfure mixte comprend au moins un élément choisi dans le groupe formé par le platine, l'osmium, le rhénium, le ruthénium, le tungstène, le molybdène, le tantale, le niobium et le titane, et au moins un élément choisi dans le groupe formé par le palladium, le nickel, le cobalt, le fer, le rhodium, le manganèse, le vanadium et le chrome.

7. Catalyseur selon l'une des revendications 1 à 6 tel que ledit sulfure mixte comprend au moins une association du soufre et des métaux suivants :

     platine-palladium,
     platine-nickel,
     platine-cobalt,
     platine-fer,
     platine-rhodium,
     platine-manganèse,
     platine-vanadium,
     platine-chrome,
     platine-ruthénium,
     osmium-palladium,
     osmium-nickel,
     osmium-cobalt,
     osmium-fer,
     osmium-rhodium,
     osmium-manganèse,
     osmium-vanadium,
     osmium-chrome,
     osmium-ruthénium,
     rhénium-palladium,
     rhénium-nickel,
     rhénium-cobalt,
     rhéniu m-fer,
     rhénium-rhodium,
     rhénium-manganèse,
     rhénium-vanadium,
     rhénium-chrome,
     rhénium-ruthénium,
     ruthénium-palladium,
     ruthénium-nickel,
     ruthénium-cobalt,
     ruthénium-fer,
     ruthénium-rhodium,
     ruthénium-manganèse,
     ruthénium-vanadium,
     ruthénium-chrome,

tungstène-palladium,
tungstène-nickel,
tungstène-cobalt,
tungstène-fer,
tungstène-rhodium,
tungstène-manganèse,
tungstène-vanadium,
tungstène-chrome,
tungstène-ruthénium,
molybdène-palladium,
molybdène-nickel,
molybdène-cobalt,
molybdène-fer,
molybdène-rhodium,
molybdène-manganèse,
molybdène-vanadium,
molybdène-chrome,
molybdène-ruthénium,
tantale-palladium,
tantale-nickel,
tantale-cobalt,
tantale-fer,
tantale-rhodium,
tantale-manganèse,
tantale-vanadium,
tantale-chrome,
tantale-ruthénium,
niobium-palladium,
niobium-nickel,
niobium-cobalt,
niobium-fer,
niobium-rhodium,
niobium-manganèse,
niobium-vanadium,
niobium-chrome,
niobium-ruthénium,
titane-palladium,
titane-nickel,
titane-cobalt,
titane-fer,
titane-rhodium,
titane-manganèse,
titane-vanadium,
titane-chrome,
titane-ruthénium,
iridium-palladium,
iridium-nickel,
iridium-cobalt,
iridium-fer,
iridium-rhodium,
iridium-manganèse,
iridium-vanadium,
iridium-chrome,
iridium-ruthénium.

8.  Catalyseur selon l'une des revendications 1 à 7 tel que ledit sulfure mixte comprend au moins un des couples suivants :

platine-nickel,
ruthénium-vanadium.

9. Catalyseur selon l'une des revendications 1 à 6 tel que ledit sulfure mixte ne comprend pas au moins une association du soufre et des métaux suivants :

ruthénium-nickel
ruthénium-cobalt,
tungstène-nickel,
tungstène-cobalt,
tungstène-fer,
molybdène-nickel,
molybdène-cobalt,
molybdène-fer.

10. Catalyseur selon l'une des revendications 1 à 6 tel que ledit sulfure mixte ne comprend pas au moins une association du soufre et des métaux suivants :

ruthénium-nickel
ru thénium-cobalt,
tungstène-nickel,
tungstène-cobalt,
tungstène-fer,
molybdène-nickel,
molybdène-cobalt,
molybdène-fer,
molybdène-vanadium,
niobium-nickel,
niobium-cobalt.

11. Catalyseur selon l'une des revendications 1 à 10 tel que l'énergie moyenne de la liaison entre le métal et le soufre dudit sulfure mixte est comprise entre 35 et 65 kCal/mol (146 et 272 kJ/mol).

12. Catalyseur selon l'une des revendications 1 à 11 tel que l'énergie moyenne de la liaison entre le métal et le soufre dudit sulfure mixte est comprise entre 39 et 61 kCal/mol (163 et 255 kJ/mol).

13. Procédé d'hydroraffinage ou d'hydrocraquage de charges hydrocarbonées caractérisé en ce qu'il comprend l'utilisation d'un catalyseur selon l'une des revendications 1 à 12 pour le traitement ou le prétraitement de charges.

14. Procédé selon la revendication 13 tel que l'on procède à au moins une des opérations suivantes : l'hydrogénation, l'hydrodéazotation,la démercurisation, la désarsénification, l'hydrodéoxygénation, l'hydrodéaroniatisation, l'hydrodésulfuration, l'hydrodémétallisation, l'hydroisoniérisation, l'hydrodéalkylation, l'hydrogénolyse, la deshydrogénation et l'hydrocraquage à partir de charges hydrocarbonées contenant des composés aromatiques, et/ou oléfiniques, et/ou naphténiques, et/ou paraffiniques.

15. Procédé selon l'une des revendications 13 ou 14 tel que les charges employées sont des coupes pétrolières seules ou en mélange telles que des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés et des charges provenant des procédés de conversions thermiques ou catalytiques telles que ses coupes issues du charbon, ses hydrocarbures produits à partir du gaz naturel, ou ses hydrocarbures produits à partir de la synthèse Fischer-Tropsch.

16. Procédé selon l'une des revendications 13 à 15 tel que lesdites charges comprennent au moins un hétéroatome tel que le soufre, l'oxygène ou l'azote et/ou au moins un métal.

17. Procédé selon l'une des revendications 13 à 16 tel que les conditions opératoires sont les suivantes : la température est supérieure à 100°C, la pression est supérieure à 0,05 MPa, le taux de recyclage d'hydrogène est au minimum de 50 normaux litres d'hydrogène par litre de charge et la vitesse volumique horaire est comprise entre 0,1 et 20 volume de charge par volume de catalyseur et par heure.

18. Procédé selon l'une des revendications 13 à 17 tel que le catalyseur est soumis à un traitement de sulfuration permettant de transformer, au moins en partie, les espèces métalliques en sulfure avant leur mise en contact avec la charge à traiter.

FIG.1

FIG.2

**Office européen des brevets**

## RAPPORT DE RECHERCHE EUROPEENNE

Numéro de la demande

EP 98 40 0045

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 181 082 A (EXXON RESEARCH ENGINEERING CO) 14 mai 1986<br><br>* revendications 1-17 *<br>--- | 1,5-7, 10, 13-16,18 | B01J27/04<br>C10G49/02 |
| A | US 5 122 258 A (EADIE DONALD T ET AL) 16 juin 1992<br>--- | | |
| A | US 4 595 672 A (HO TEH C ET AL) 17 juin 1986<br>----- | | |

**DOMAINES TECHNIQUES RECHERCHES (Int.Cl.6)**

B01J
C10G

Le présent rapport a été établi pour toutes les revendications

| Lieu de la recherche | Date d'achèvement de la recherche | Examinateur |
|---|---|---|
| LA HAYE | 7 avril 1998 | Thion, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)